# EUROPEAN PATENT APPLICATION

(11) **EP 1 289 229 A2**
(43) Date of publication of application: **05.03.2003**
(21) Application number: 02251846.8
(22) Date of filing: 14.03.2002
(51) Int. Cl.: H04L 29/06

(54) **Dynamic protocol exchange system and method**

(30) Priority: 04.09.2001 JP 2001267720
(71) Applicant: FUJITSU LIMITED, Kawasaki-shi, Kanagawa 211-8588 (JP); Amamiya, Makoto, Fukuoka-shi, Fukuoka 815-0083 (JP)
(72) Inventor: Iwao, Tadashige, Fujitsu Limited, Kawasaki-shi, Kanagawa 211-8588 (JP); Wada, Yuji, Fujitsu Limited, Kawasaki-shi, Kanagawa 211-8588 (JP); Okada, Makoto, Fujitsu Limited, Kawasaki-shi, Kanagawa 211-8588 (JP); Amamiya, Makoto, Fukuoka-shi, Fukuoka 815-0083 (JP)
(74) Representative: Stebbing, Timothy Charles

(57) **Abstract**

A protocol definition 40 is prepared that includes a transition rule list 20 that lists transition rules each of which specifies correspondence among an input pattern to be received, a processing to be executed, and an output pattern as a result of the processing and a state table 30 specifying correspondences between system states and the one or plural transition rules used in the system states. A state detection section 50 detects a current system state, and transition rules corresponding to the current system state are checked and taken out from the transition rule list 20 and are read into the execution section 10, so that a protocol is composed of these transition rules. In response to supply of input data, transition rules having patterns matching input patterns of the inputted data are executed. Then, in response to transition of the system state resulting from the foregoing processing, transition rules are read that corresponds to a system state after the transition so that a new protocol is installed. Thus, by dynamically exchanging a protocol according to variation of a dynamic system state, an optimal protocol for a current system state can be installed.

## Description

The present invention relates, generally to a system and method for dynamically installing and exchanging protocols to be used by a computer system according to a state of the computer system.

Recently, applications increase that allow a plurality of computer systems distributed in a network and linked with each other to perform processing, as the computer network technology is advanced. In the case where an object of a client application and an object of a server application are linked with each other to perform processing, it is necessary to describe interfaces of the services of the client and server in the interface definition language (IDL) or the world wide web service definition language (WSDL), and to mutually transmit data according to respective protocols adapted therein. Thus, in the case where computer systems are linked in a distributed computer network, whether or not the protocols used therein match each other is a significant problem. If the protocols do not match each other, the computer systems cannot make communication with each other. Therefore, in the prior art, protocols used in computer systems are defined strictly, and computer systems are required to produce communication routines according to the foregoing strictly defined protocols. To link computer systems via a network to perform processing, it is necessary to understand the protocols in detail and know how to use the same thoroughly. In other words, it is necessary to clarify what processing the respective objects perform and what parameters are needed for transmission required for performing the foregoing processing. Thus, the conventional protocols are described in detail about the overall external interface so as to cover every state of the computer systems, and are prepared beforehand in computer systems so that they are fixedly determined when the computer systems are activated; in other words, they are static protocols.

The aforementioned conventional static protocols have the following problems.

The first problem of the conventional static protocols is that protocols are fixed when a computer system is started. Since protocols described in detail about the overall external interface so as to cover every state of the computer system are installed upon the start of the computer system, the protocols are fixed and cannot be changed dynamically according to a state of the system. In the case where static protocols are used, the relationship between objects of computer systems is fixed also, thereby making it difficult to build computer systems that have free mutual relationship therebetween and that are able to implement object linkage that allows flexible distribution processing to be performed.

The second problem of the conventional static protocols is that a change in the specification or version of the protocols incurs a heavy load of rewriting of protocols. The development of the network technology and the distribution computer technology occasionally requires changes in specifications and versions of protocols used in computer systems. In the case where modules for processing protocols are provided as hardware, every time the specifications and versions of protocols are changed, corresponding hardware portions have to be changed.

On the other hand, in the case where protocols are installed as software in a memory device of a computer system, when the specifications and versions of protocols are changed, corresponding changes in the protocols can be achieved by rewriting the protocol portions of the software. However, to rewrite the protocol portions of the software, it is necessary either to re-install program modules of the protocols installed in a memory device of a computer system, or to access the program modules of the protocols so as to conduct necessary rewriting with respect to a part thereof. Since the scale of programs of protocols expands with the development of the network technology and the distributed computing technology, frequent re-installation or rewriting of program modules of protocols causes a heavy load, thereby deteriorating processing efficiencies of computer systems.

Furthermore, in order to improve processing efficiencies in cooperative processing performed by computer systems linked via a network, it is preferable that protocols optimal for current states of the systems are installed. However, since the states of the computer systems vary every moment, if the re-installation or rewriting of the program modules of protocols is to be conducted according to the states of the computer systems, the re-installation or rewriting frequently occurs, thereby causing the processing efficiencies of the computer systems to deteriorate.

Therefore, it is an object of the present invention to provide a dynamic protocol exchanging system and method that are capable of implementing the installation of protocols optimal for current system states by exchanging protocols dynamically according to dynamic changes in the system states, while maintaining processing efficiencies of the computer systems.

To achieve the aforementioned object, a dynamic protocol exchange system of the present invention includes: a transition rule list section that includes transition rules each of which specifies correspondence among an input pattern to be received, a processing to be executed, and an output pattern to be outputted as a result of the processing; and an installation section that installs one or a plurality of transition rules as a protocol of the system, the transition rules being selected from the transition rule list section according to a system state, wherein the installation section dynamically exchanges installed contents of the protocol according to the system state.

Furthermore, a dynamic protocol exchange system of the present invention includes: a protocol definition section including a transition rule list section and a state table section, the transition rule list section including transition rules each of which specifies correspondence among an input pattern to be received, a processing to be executed, and an output pattern to be outputted as a result of the processing, the state table specifying correspondences between the system states and one or plural transition rules to be used in the system states; a state detection section that detects a system state; and an installation section that installs one or plural transition rules as a protocol of the system, the transition rules being selected from the transition rule list according to a system state, wherein the installation section is notified of a system state by the state detection section, retrieves transition rules corresponding to the system state from the state table, and installs therein the one or plural transition rules as retrieval results from the transition rule list as a protocol of the system.

With the foregoing configuration, according to a current system state, the dynamic protocol exchange system of the present invention is allowed to install only transition rules that describe an input pattern to be received currently and processing to be executed when the foregoing input pattern is received, whereby the scale of the protocol to be installed currently can be reduced. Furthermore, according to the system state that dynamically varies with the execution of processing of the transition rules, the transition rules to be installed can be exchanged dynamically, thereby making the protocol non-static and making it possible to exchange the protocol dynamically. Only transition rules to be installed may be determined for each system state, and there is no need to prepare a protocol that covers all the system states in a unified way. Furthermore, since only exchange of transition rules to be installed currently is required, a load of rewriting decreases.

It should be noted by defining the transition rules so as not include information concerning system stages, it is possible to describe input patterns and processing freely and flexibly without dependence on system states, and the versatility of transition rules can be enhanced.

Furthermore, the installation section preferably selects and installs not transition rules covering all the states that the system can possibly take, but only one or a plurality of transition rules corresponding to a current system state.

The dynamic protocol exchange system of the present invention preferably further includes a data input/output section for inputting/outputting data, and a processing execution section that executes processing of a transition rule that has an input pattern matching an input pattern of data inputted to the system via the data input/output section.

According to the foregoing configuration, the dynamic protocol exchange system of the present invention can execute processing matching an input pattern, detect a system state resulting from the execution of the processing, and dynamically select a transition rule to which correspondence to the detected system state is specified by the state table, so that the transition rules are installed.

Furthermore, it is possible to provide layers in the system state transition relationship determined according to the state table of the state table section and the transition rules of the transition rule list section, so as to make the relationship multiplex.

Furthermore, a recording medium may be provided in which a processing program for implementing the foregoing dynamic protocol exchange system is recorded, so that a processing program for constituting an object linkage device is read from the recording medium by a personal computer or the like. By so doing, it is possible to implement a dynamic protocol exchange system of the present invention easily at low cost.

FIG. 1 is a view schematically illustrating the relationship among system states, transition rules corresponding to the system states, and state transitions according to a first embodiment of the present invention.

FIG. 2 is a view illustrating an example of a protocol definition shown in FIG. 1 described in the XML format.

FIG. 3 is a block diagram schematically illustrating an example of a configuration of a dynamic protocol exchange system of the present invention.

FIG. 4 is a view schematically illustrating the relationship between protocol definitions and state transitions according to the second embodiment of the present invention.

FIG. 5 is a view schematically illustrating protocol installation processing at an initial stage.

FIG. 6 is a view illustrating system state transition in the case where data with an input pattern I₁₀ are inputted.

FIG. 7 is a view schematically illustrating protocol exchange processing that is caused in response to transition of a system state at a second layer from S₂₁ to S₂₂.

FIG. 8 is a view illustrating system state transition in the case where data with an input pattern I₁ are inputted.

FIG. 9 is a view schematically illustrating protocol exchange processing that is caused in response to transition of a system state at a first layer from S₁₁ to S₁₂.

FIG. 10 is a view illustrating system state transition in the case where data with an input pattern I₇ are inputted.

FIG. 11 is a view schematically illustrating protocol exchange processing that is caused in response to transition of a system state at the first layer from S₁₂ to S₁₄.

FIG. 12 is a view illustrating system state transition in the case where data with an input pattern I₁₂ are inputted.

FIG. 13 is a view schematically illustrating protocol exchange processing that is caused in response to transition of a system state at the second layer from S₂₂ to S₂₃.

FIG. 14 is a view illustrating system state transition in the case where data with an input pattern I₉ are inputted.

FIG. 15 is a view schematically illustrating protocol exchange processing that is caused in response to transition of a system state at the first layer from S₁₄ to S₁₂.

FIG. 16 is a view illustrating system state transition in the case where data with an input pattern I₂ are inputted.

FIG. 17 is a view schematically illustrating protocol exchange processing that is caused in response to transition of a system state at the second layer from S₂₃ to S₂₁.

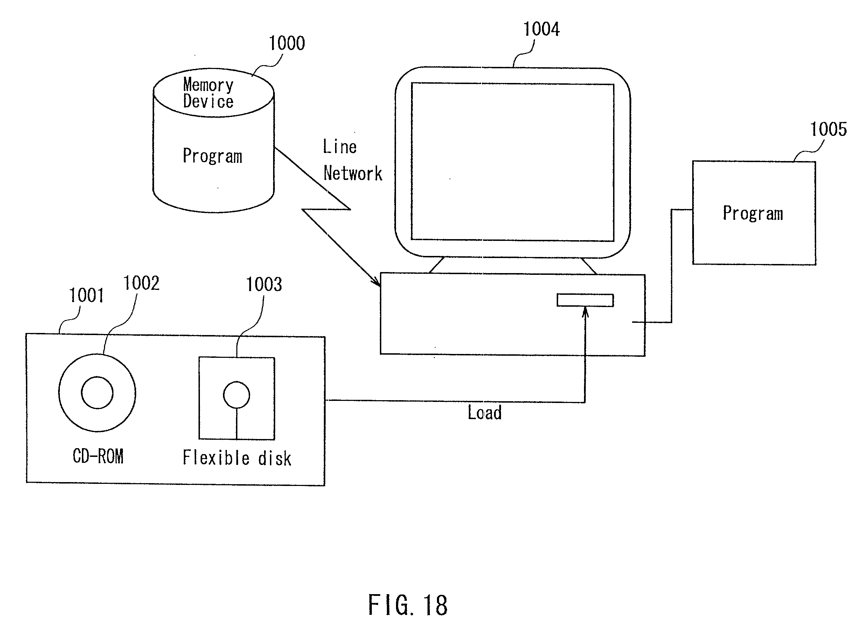

FIG. 18 is a view illustrating an example of a recording medium in which a processing program is recorded that implements a dynamic protocol exchange system according to a third embodiment of the present invention.

The following description will depict a dynamic protocol exchange system of the present invention, while referring to the drawings.

### First Embodiment

A dynamic protocol exchange system of the present invention dynamically reads a transition rule according to a system state, and operates according to the currently installation rules. The transition rule specifies a correspondence between an acceptable input pattern, processing to be executed, and an output pattern to be outputted as a result of the processing.

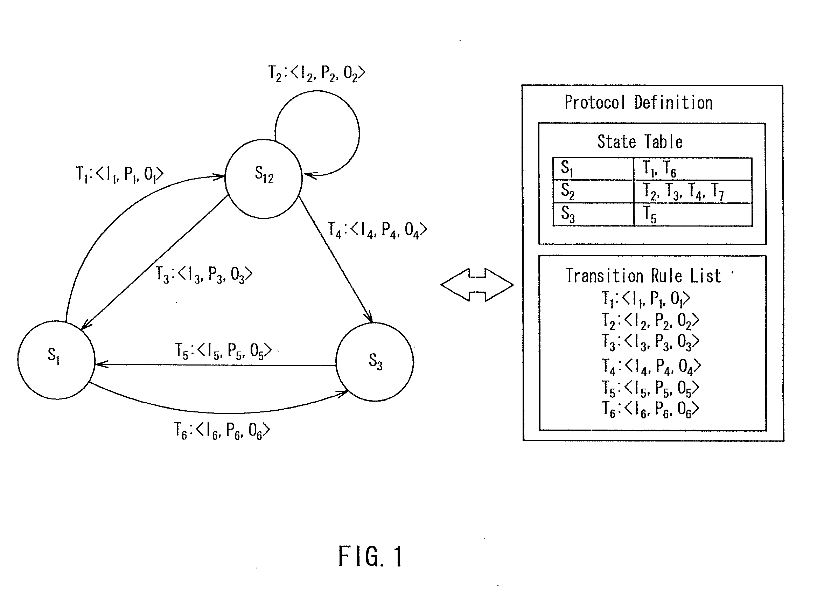

FIG. 1 schematically illustrates the relationship between system states, sets of transition rules that correspond to the system states and state transitions, respectively.

In FIG. 1, S₁, S₂, and S₃ represent system states. Arrows extended between the system states S₁, S₂, and S₃ represent state transitions, and the transitions are described with sets of transition rules, respectively. Each transition rule Tₙ is described in a form of <Iₙ, Pₙ, Oₙ>, and Iₙ, P_{n,} and Oₙ represent an input pattern, processing to be performed by a system, and an output pattern as a result of the processing, respectively.

One or a plurality of specific transition rules are assigned to the states S₁, S₂, and S₃ of a system. A table showing the relationships between the operation states of the system and the set of transition rules assigned thereto is defined as a state table. An example of the state table shown in FIG. 1 illustrates that transition rules T₁ and T₆ are assigned in the case where the system is in a state S₁, transition rules T₂, T₃, and T₄ are assigned in the case where the system is in a state S₂, and a transition rule T₅ is assigned in the case where the system is in a state S₃.

A transition rule is a list including all of defined transition rules. According to an example of the transition rule list shown in FIG. 1, the transition rules T₁ to T₆ are listed therein. Each system dynamically reads one of the predetermined transition rules in the transition rule list so as to correspond to a current system state according to the state table.

Herein, a combination of the state table and the transition rule list is called protocol definition. In the case where individual protocol definitions are prepared for each system, there is no need to fixedly install massive and detailed protocols such as conventional static protocols; only transition rules necessary for a current system state have to be read in so as to be replaced with transition rules for a previous state before a state transition.

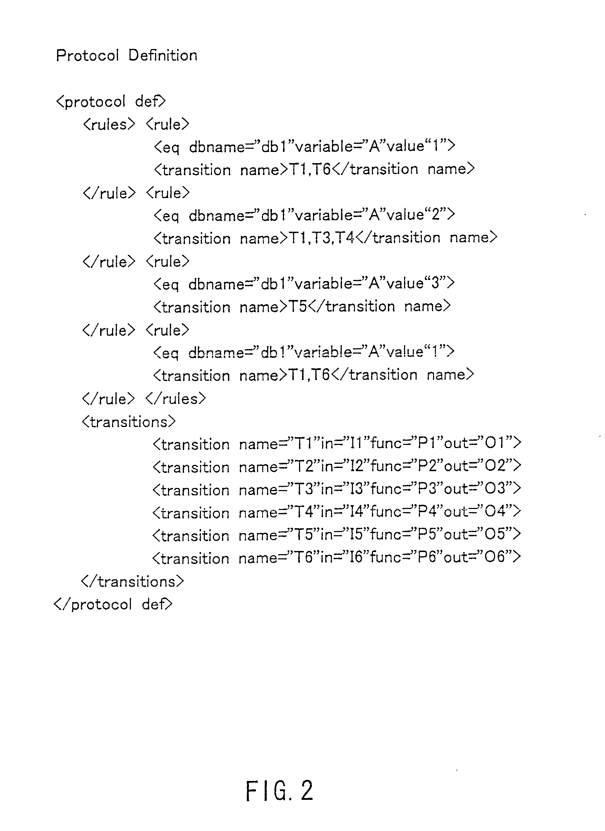

FIG. 2 is a view illustrating an example of description in the XML format of the protocol definition shown in FIG. 1. Individual protocol definitions of systems may be prepared as shown in FIG. 2.

The following description will depict how protocols are exchanged dynamically according to an operation state of the system, while referring to FIG. 1.

For instance, assume that the system is in a state S₁. In the case where the system is in the state S₁, the transition rules T₁ and T₆ are assigned according to the state table. Then, the two transition rules T₁ and T₆ are read in. In other words, when the system is in the state S₁, the protocol composed of two transition rules T₁ and T₆ is installed therein.

The system which reads the two transition rules T₁ and T₆ therein results in having input patterns I₁ and I₆, hence respond to only an input of data having either the input pattern I₁ or I₆ and executes either processing P₁ or P₆. Here, for instance, assume that data having the input pattern I₁ are inputted, the processing P₁ is executed, and output data having an output pattern O₁ are outputted. In the case where the processing P₁ is executed, the system makes state transition from the state S₁ to the state S₂.

Here, because the system has made state transition, transition rules assigned to the system state S₂ are checked by referring to the state table again, and it is found that transition rules T₂, T₃, and T₄ are assigned thereto. Therefore, the transition rules T₂, T₃, and T₄ are read in from the transition rule list, and the transition rules T₁ and T₆ assigned for the system state S₁ are exchanged for the foregoing transition rules T₂, T₃, and T₄. In other words, the protocol installed in the system is switched dynamically from the protocol composed of the two transition rules T₁ and T₆ assigned for the system state Si to the protocol composed of the three transitions rules T₂, T₃, and T₄ assigned for the system state S₂.

As described above, one or a plurality of transition rules are read in dynamically according to each state of the system, and an installed protocol is exchanged dynamically for a protocol composed of the foregoing read transition rules. Thus, it is not necessary to install in a system transition rules covering all the states that the system can possibly take, but it will suffice to install only one or a plurality transition rules selected so as to correspond to a current state of the system.

It should be noted that in the foregoing case there is no overlapped transition rule in the two transition rules T₁ and T₆ corresponding to the system state S₁ and the three transition rules T₂, T₃, and T₄ corresponding to the system state S₂. However, in the case where there is an overlapped transition rule in the foregoing two sets of transition rules, the exchange may be carried out so that only the transition rules other than the overlapped rule are exchanged. Alternatively, the exchange may be carried out so that all the transition rules corresponding to a system state after state transition including the overlapped rule are read in without checking overlapping of the transition rules. In the case where each of transition rules has a small data capacity, the latter processing is preferable. This is because in the latter case, the protocol exchange processing is simpler, and it may be carried out independently from a previous state of installation of a protocol before a state transition. The embodiment shown below will be described assuming that the latter processing is used therein.

It should be noted that in the case where transition rules are described so as not to include information regarding operation states of a system, the relationship between an input pattern Iₙ, processing Pₙ and an output pattern Oₙ can be described freely and flexibly without dependence on the operation state of the system, and the applicability of the transition rules can be enhanced.

Next, an example of a configuration of a dynamic protocol exchange system of the present invention is shown in below.

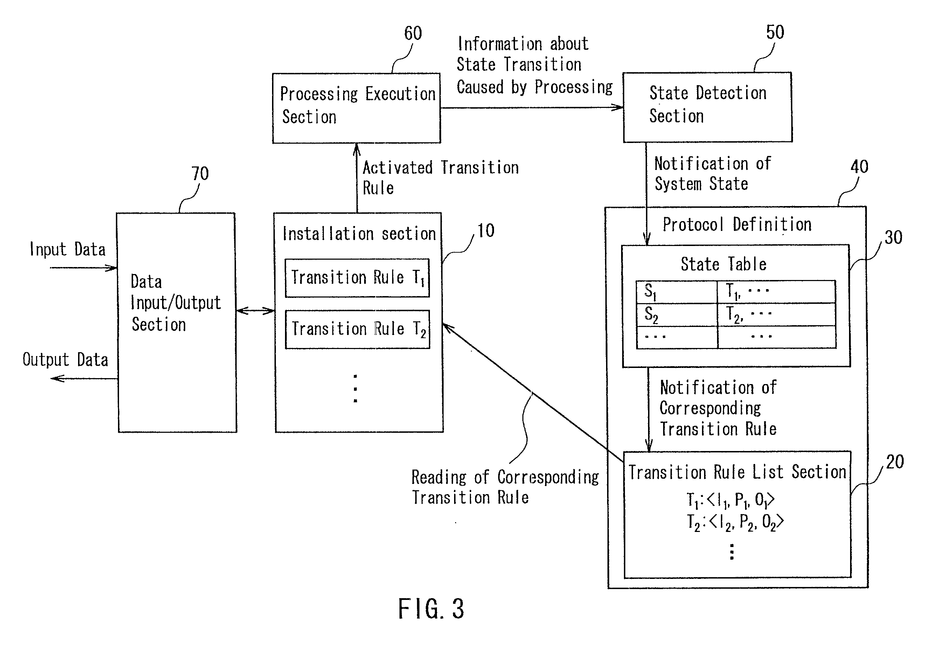

FIG. 3 is a block diagram schematically illustrating an example of a configuration of a dynamic protocol exchange system of the present invention.

10 denotes an installation section that selects one or a plurality of transition rules from a transition rule list section 20 according to a system state and reads the same therein, so that a protocol composed of the one or plural transition rules is installed therein.

20 denotes the transition rule list section in which transition rules are listed so that it specifies correspondences between input patterns to be accepted, processing operations to be executed, and output patterns to be obtained as processing results. The transition rule list section provides data of a transition rule in response to a request from the installation section 10.

It should be noted that the example of FIG. 3 has a configuration further including a state table section 30, a protocol definition section 40, a state detection section 50, a processing execution section 60, and a data input/output section 70.

The processing execution section 60 executes processing of a transition rule having an input pattern that matches an input pattern of data inputted to the system via the data input/output section 70, among the transition rules installed in the installation section 10, and notifies the state detection section 50 of information concerning a state transition in the system caused by the processing.

The state detection section 50 is a section for detecting a system state. The state detection section 50 checks information regarding a state transition supplied from the processing execution section 60 and parameters representing the other details of the system state, so as to detect the system state. The system state information thus detected is notified to the state table section 30 of the protocol definition section 40.

The protocol definition section 40 is configured to include the transition rule list section 20 and the state table section 30.

The state table section 30 holds a state table that specifies correspondences between operation states of the system and one or a plurality of transition rules to be used in the operation states. Using a system state notified by the state detection section 50 as a retrieving key, it retrieves one or a plurality of corresponding transition rules and notifies the installation section 10 of the same. It should be noted that the installation section 10 reads the notified transition rules from the transition rule list section 20 into itself.

The data input/output section 70 inputs/outputs data from/to the other systems on the network. It should be noted that the installation section 10 accepts inputted data according to the installed protocol in the case where the protocol includes a transition rule that specifies the acceptance of an input pattern of the input data, and causes the transition rule to be executed by the processing execution section 60. Furthermore, a result of the processing is outputted as output data having an output pattern according to the transition rule via the data input/output section 70.

As described above, according to the input data inputted via the data input/output section 70, the protocol is exchanged dynamically through a processing loop for successive processing in the installation section 10 → the processing execution section 60 → the state detection section 50 → the state table section 30 → the transition rule list section 20 → the installation section 10.

Thus, a protocol composed of only necessary transition rules is installed in the installation section 10 according to the system state that varies every moment as the execution of processing proceeds.

It should be noted that in the dynamic protocol exchange system of the present invention, the contents of the protocol definition can be freely rewritten. By either rewriting the protocol definition or exchanging the protocol definition by reading a new protocol definition therein, it is possible to flexibly change the system state transition relationship and the processing contents to be executed.

It should be noted that the dynamic protocol exchange system of the present invention includes two implementations described below of the processing process executed by the processing execution section 60.

The first implementation is such that the processing process itself, which is to be executed by the processing execution section 60, is described in the transition rule, and when a transition rule is read in dynamically according to a system state, a corresponding portion of the processing process is included in the transition rule to be read in. In other words, the processing Pₙ described in the transition rule Tₙ is the processing process itself. In this implementation, it is possible to freely write a processing process in a transition rule, thereby facilitating the rewriting of the processing process and the changing of contents thereof.

The second implementation is such that the processing process itself, which is to be executed by the processing execution section 60, is installed in the processing execution section 60 beforehand, and information representing the processing process, such as a name of the processing process, is described in the transition rule. In other words, the processing Pₙ described in the transition rule Tₙ is a name of the processing. In response to a notification of the name of a processing Pₙ to be actuated by the processing execution section 60, the corresponding processing process is activated. In this form, an amount of data of each transition rule to be read in dynamically according to a state of the system decreases, thereby reducing a load of data transmission processing.

Thus, with the dynamic protocol exchange system shown in the first embodiment, transition rules corresponding to a system state notified from the state detection section are retrieved from the state table section so that the installation section reads one or a plurality of corresponding transition rules from the transition rule list, so that a protocol composed of these transition rules is installed. In other words, according an operation state of the system that dynamically varies every moment, the contents of the installed protocol can be exchanged dynamically.

### Second Embodiment

As a dynamic protocol exchange system according to the second embodiment, an example is shown below in which a system has a hierarchical and multiplex set of states.

In the second embodiment, a system has a hierarchical and multiplex set of states, though the basic configuration thereof is identical to that described above of the first embodiment in which transition rules are read in dynamically according to a system state and a system is operated according to a currently installed protocol composed of the foregoing transition rules. A system has a system state as to each of layers of the hierarchy. Here, the system state can be expressed using not less than two parameters. For instance, the system state can be expressed as Sₘₙ using two parameters m and n. For instance, states S₁₁, S₁₂, S₁₃, and S₁₄ compose a first layer, and states S₂₁, S₂₂, and S₂₃ compose a second layer. For instance, the system may have the system state S₁₁ at the first layer, and the system state S₂₁ at the second layer.

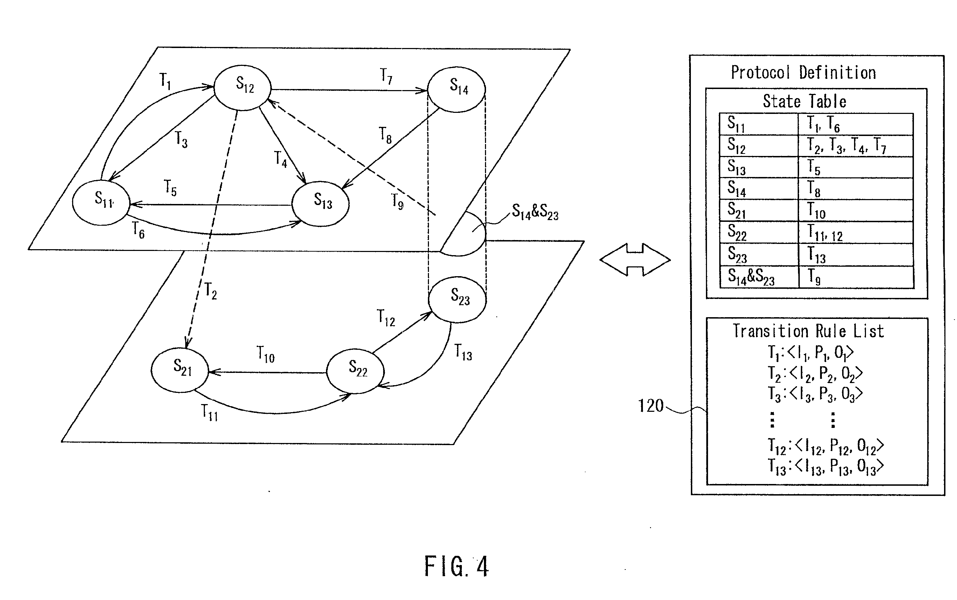

FIG. 4 schematically illustrates the relationship between a protocol definition and state transitions according to the second embodiment.

The transition rule list held by the protocol definition shown in FIG. 4 includes all the specified transition rules, like the transition rule list according to the first embodiment, and in this example, the transition rule list stores thirteen transition rules T₁ to T₁₃.

The state table held by the protocol definition shown in FIG. 4 describes in a table format correspondences between system states and transition rules assigned to the system states, respectively, like the state table according to the first embodiment, though the system states configure a hierarchical multiplexed structure. In this example, they are classified into two layers, that is, a first layer (system states S₁₁, S₁₂, S₁₃, and S₁₄) and a second layer (system states S₂₁, S₂₂, and S₂₃), and correspondences of transition rules thereto are specified so as to be assigned to the system states in the layers, respectively.

A diagram that schematically illustrates a state transition relationship according to the state table held by the protocol definition shown in FIG. 4 is a state transition diagram shown in a left half part of FIG. 4. The system state transition relationship is multiplexed so as to have two layers, that is, the first and second layers. In each layer, the relationship of state transition between system states is determined.

It should be noted that it is possible to provide dependence relationship of state transition between a plurality of layers, so as to determine dependent transition rules. In the example shown in FIG. 4, the following relationship is given: in the case where a transition rule T₂ is executed when the system state of the first layer is S₁₂, the system state of the second layer makes transition to the system state S₂₁ irrespective of what system state the second layer has, namely, the transition relationship of the second layer depends on the transition relationship of the first layer.

Furthermore, it is possible to determine a transition rule that becomes effective in the case of a specific combination of the system states of the respective layers. In the example shown in FIG. 4, the transition rule T₉ is additionally added to the first layer exclusively when the combination of the system stages of the first layer and the second layer is a combination of S₁₄ and S₂₃. In other words, exclusively when the combination of the system states of the first and second layers is a combination of S₁₄ and S₂₃, the transition rule T₉ is read in, in addition to the transition rule T₈ corresponding to the system state S₁₄ of the first layer and the transition rule T₁₃ corresponding to the system state S₂₃ of the second layer. Therefore, consequently, the transition rules T₈, T₁₃, and T₉ compose the protocol.

The following description will depict a flow of a protocol exchange system in the case where the system states are made hierarchical and multiplex, referring to the protocol definition shown in FIG. 4. Shown is an example in which the first layer and the second layer start with the system states S₁₁ and S₂₁, respectively, then, input data with input patterns I₁₀, I₁, I₇, I₁₂, I₉, and I₂ are successively supplied as input data, thereby causing state transition, in which the protocol is dynamically exchanged according to the system state. The foregoing example is a case where when input data with an input pattern I₉ are supplied, state transition is caused in the first layer according to the combination of the system states of the first and second layers, and when input data with an input pattern I₂ are supplied, stat transition dependent on the combination of system state in the first layer is caused in the second layer.

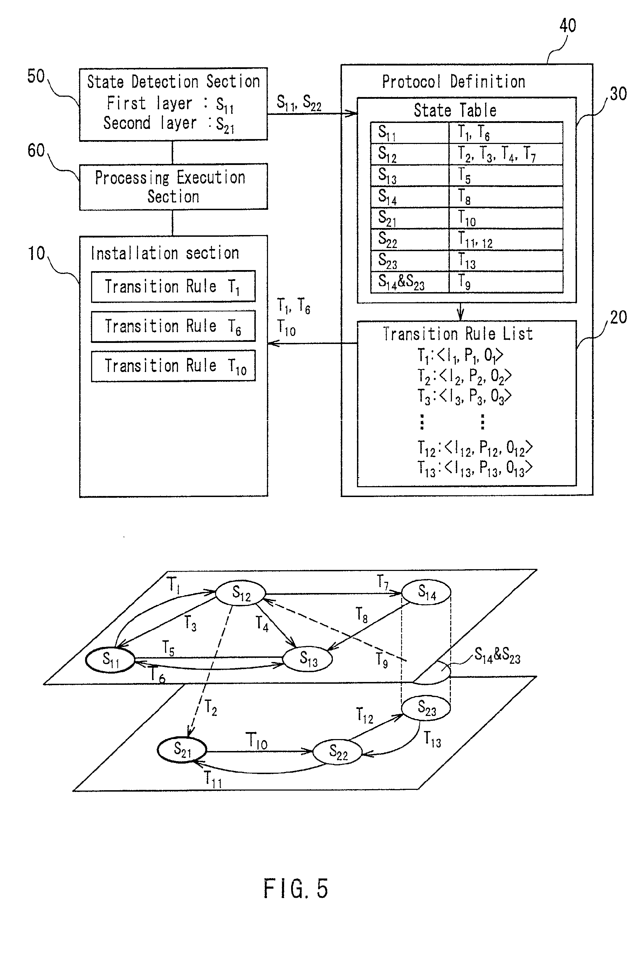

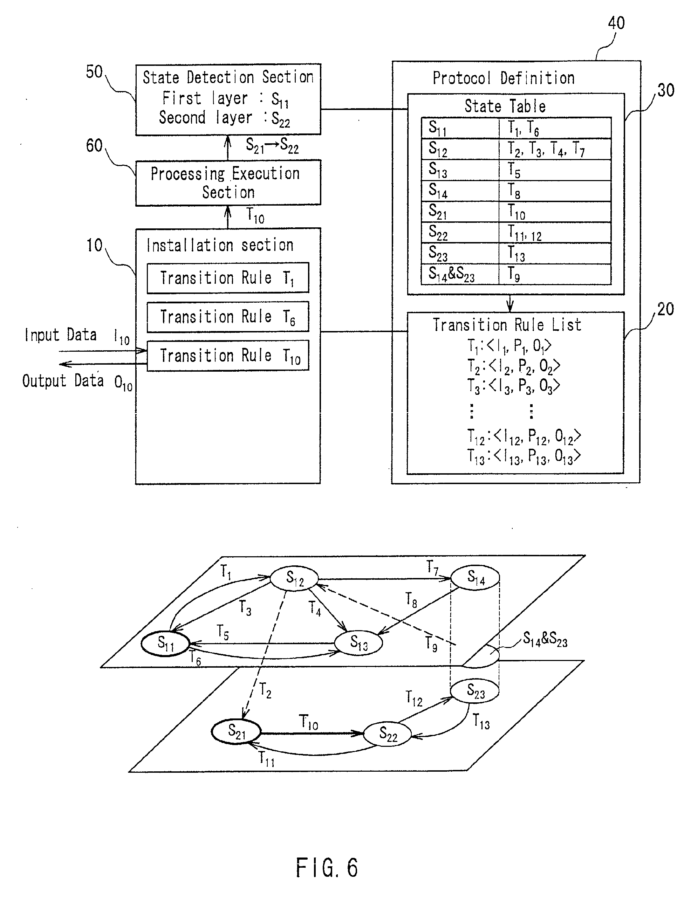

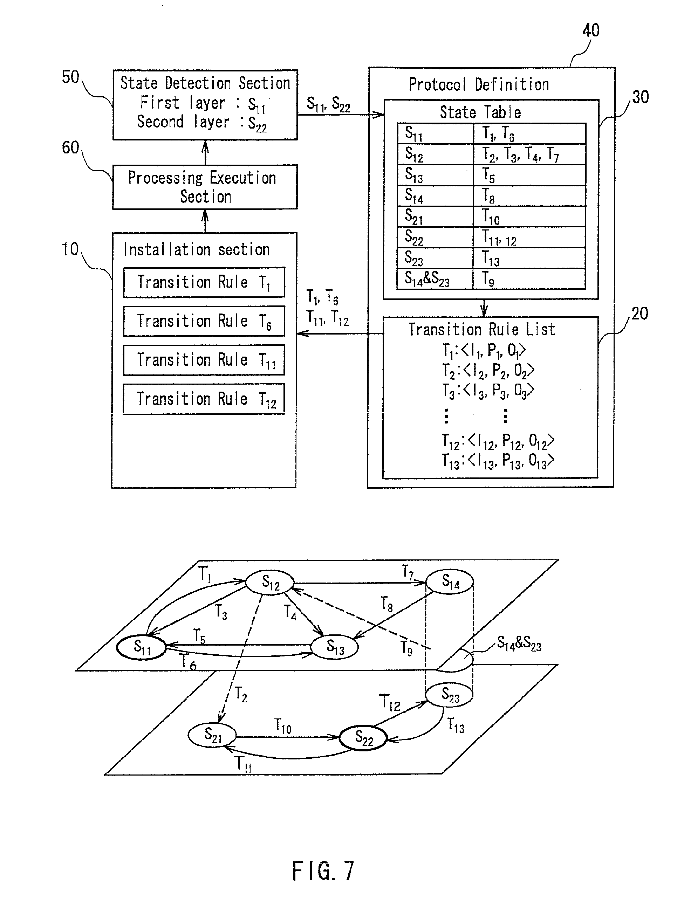

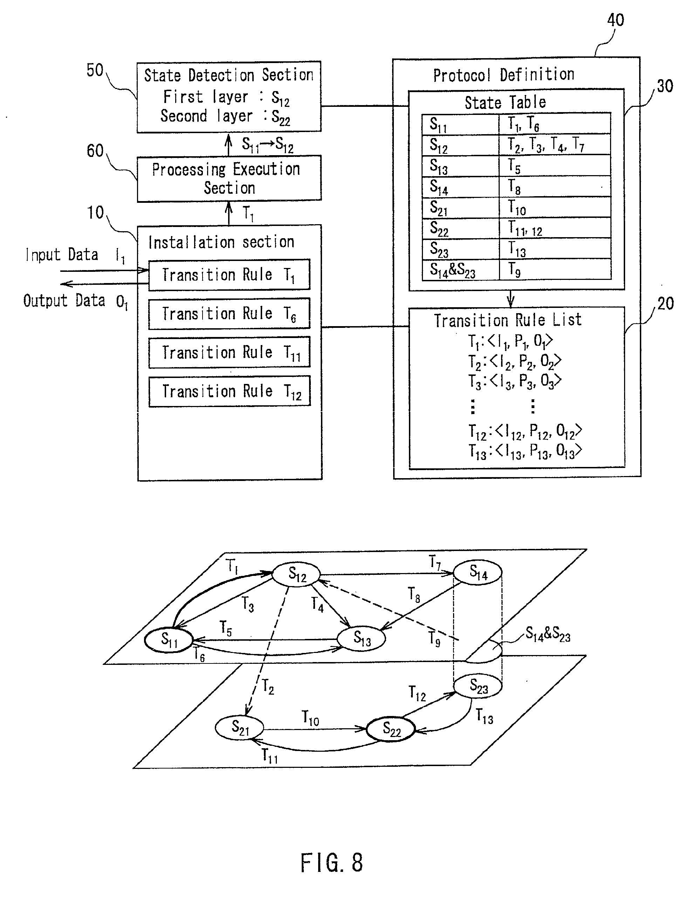

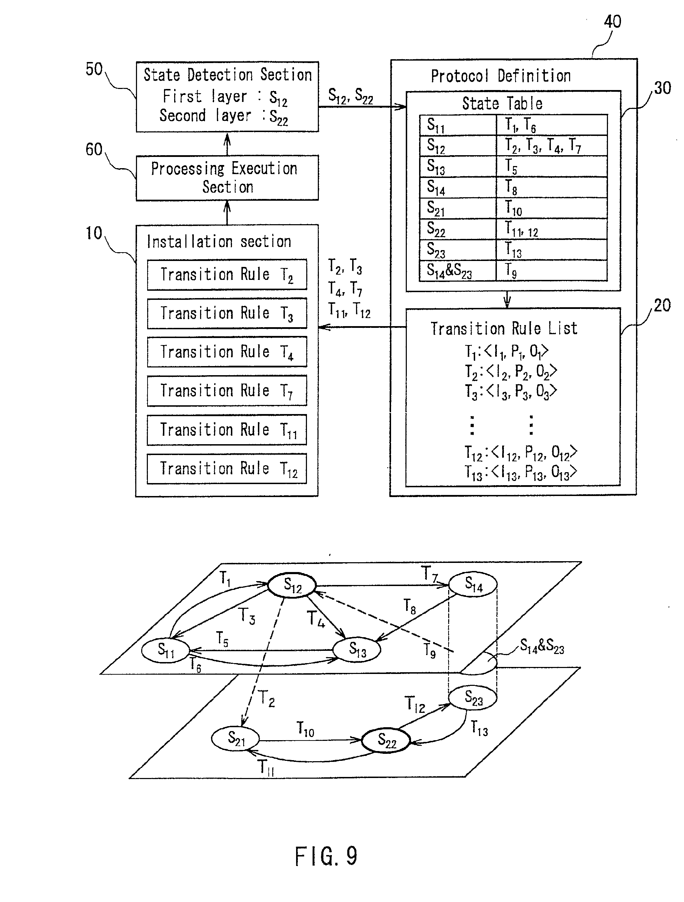

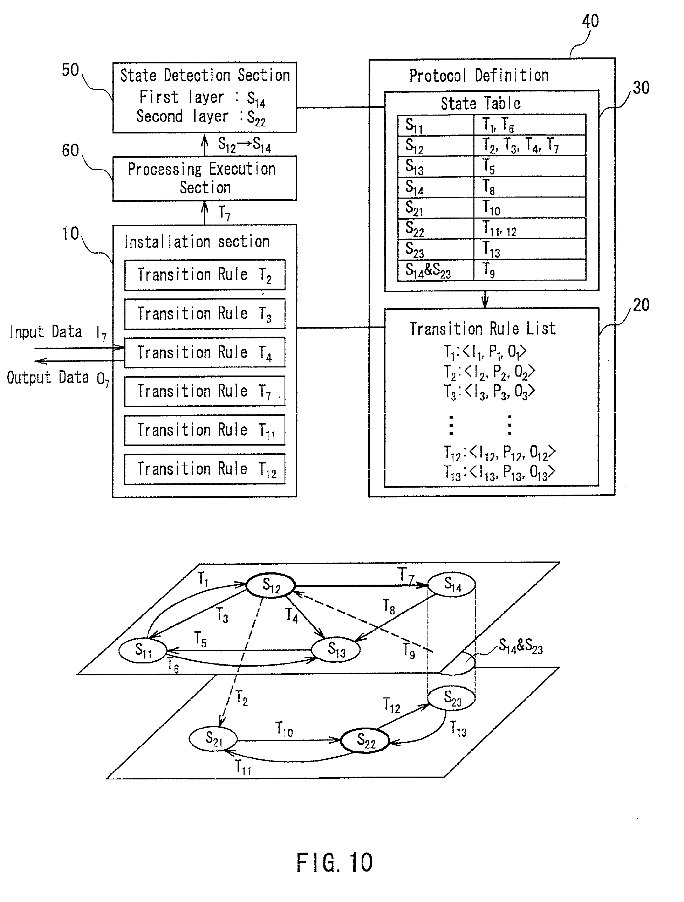

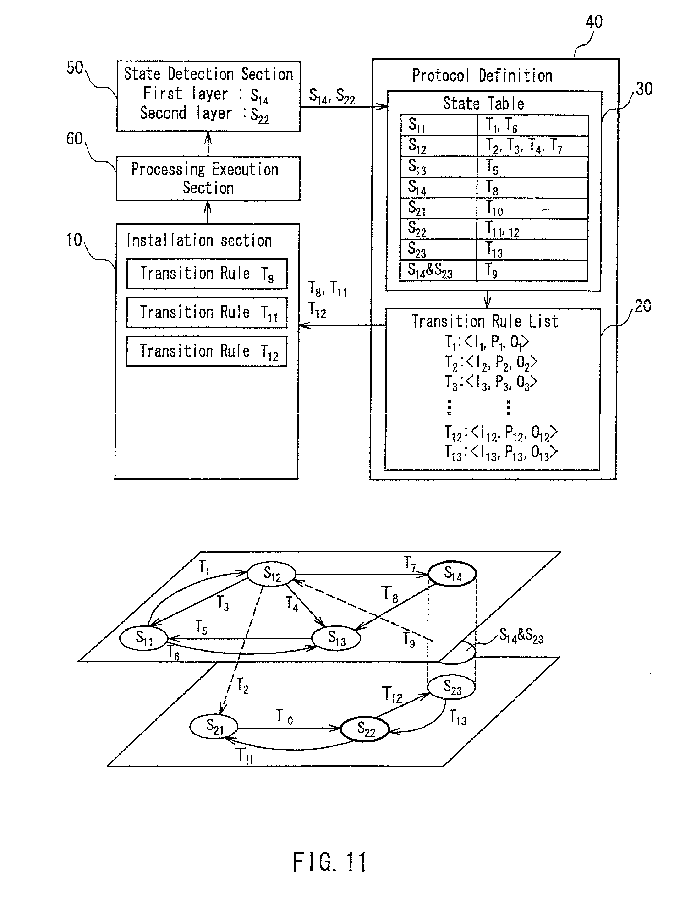

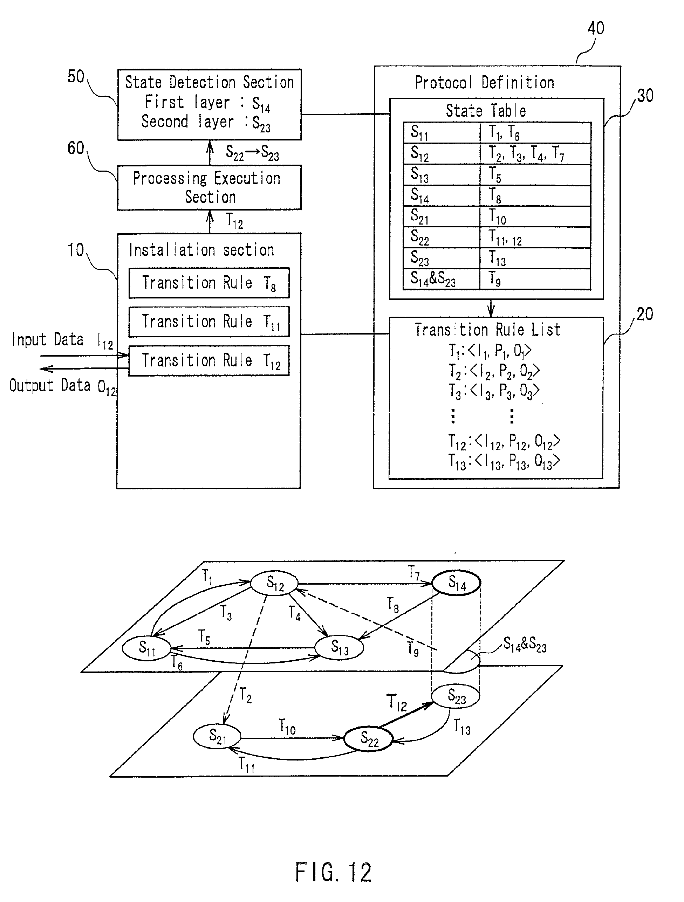

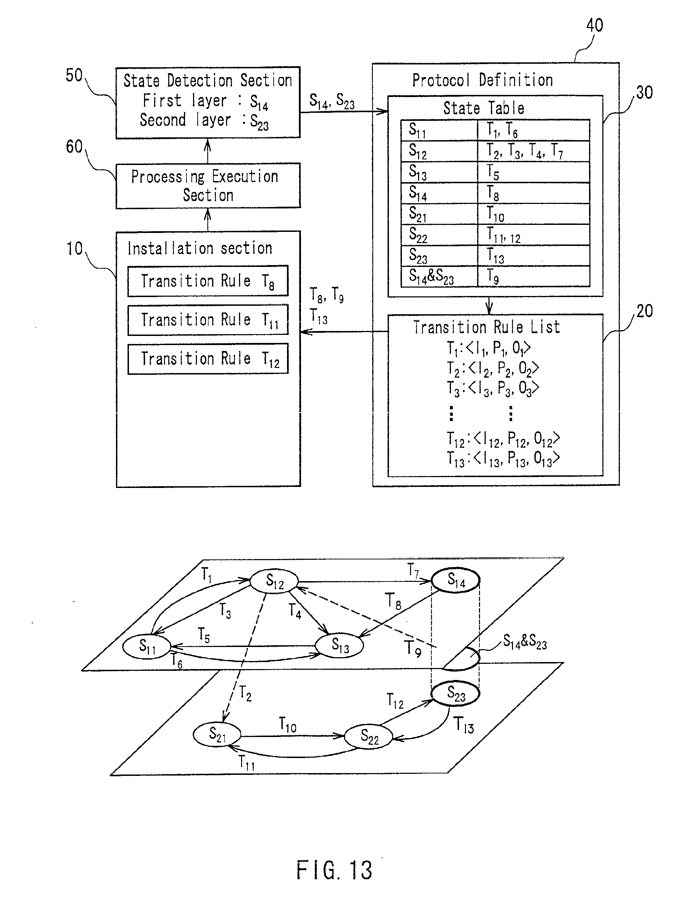

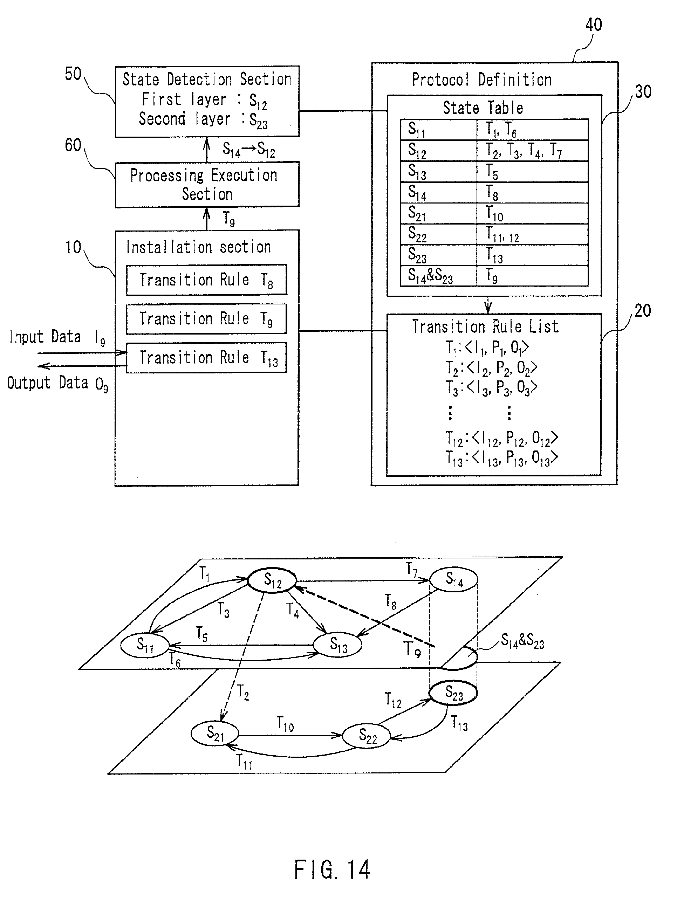

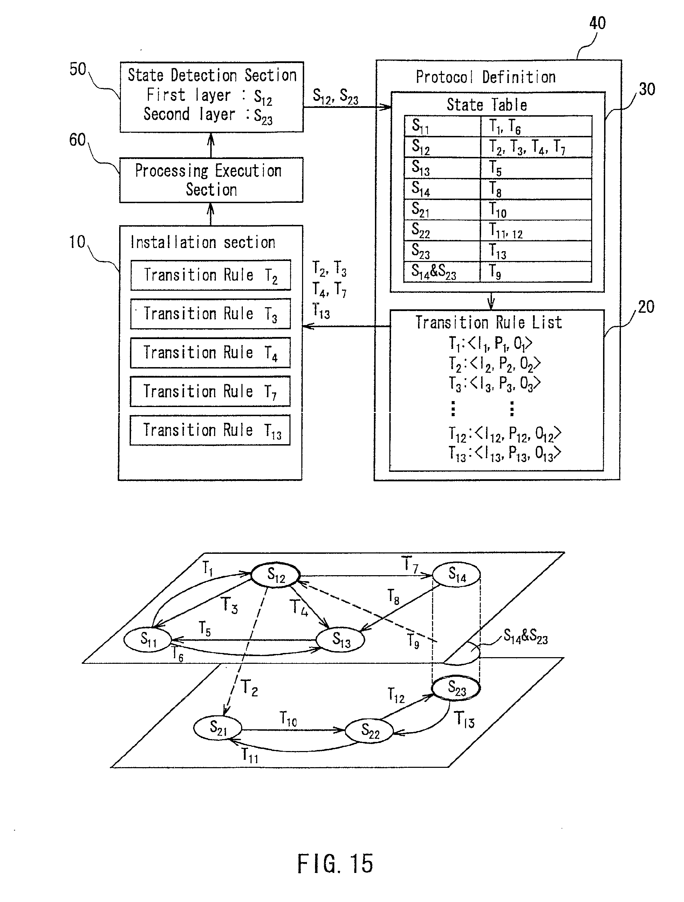

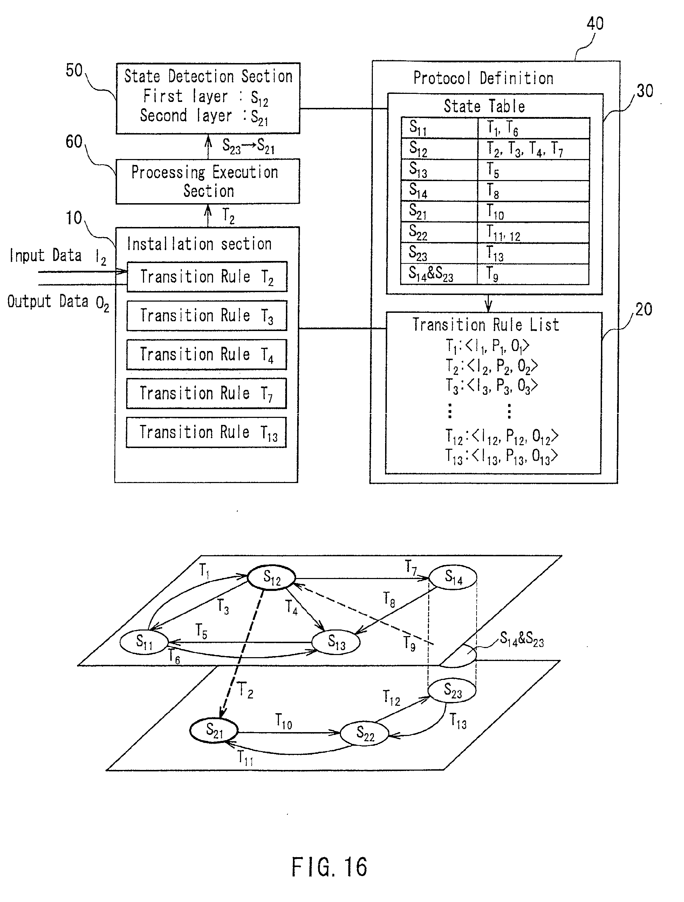

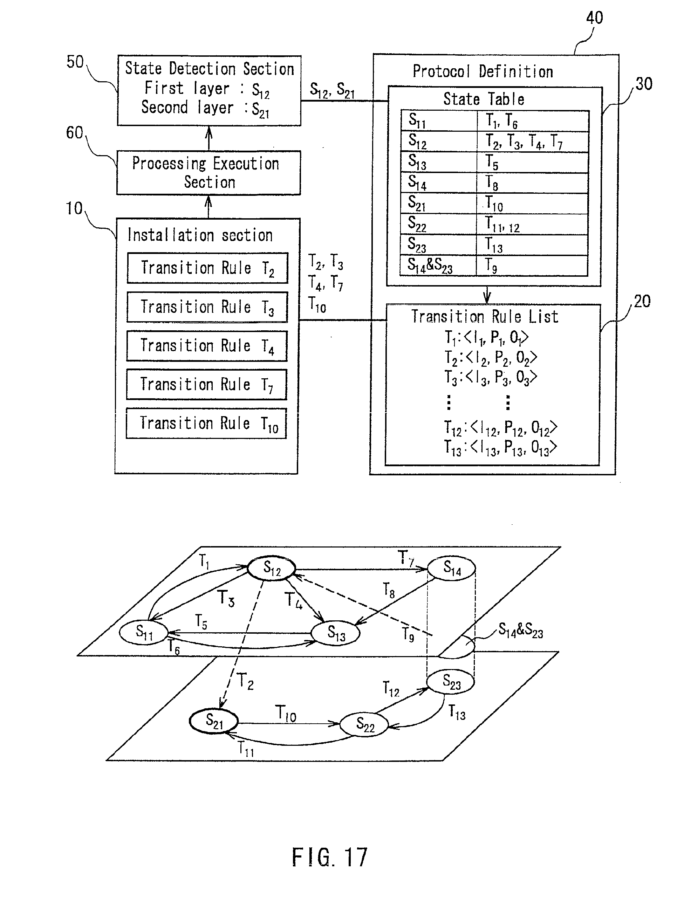

It should be noted that the system configuration of the dynamic protocol exchange system according to the second embodiment may be identical to that shown in FIG. 3 explained in conjunction with the first embodiment, and descriptions of the same are omitted here. FIGS. 5 to 17 schematically and simply illustrate the installation section 10 to the processing execution section 60, along with system state transition diagrams. In each diagram, the protocol definition is identical to that shown in FIG. 4, and the same state table and transition rule list as those in shown in FIG. 4 are held in the state table section 30 and the transition rule list 20, respectively.
(1) First of all, assume that the system states in the first and second layers start with the system state S₁₁ and S₂₁, respectively. FIG. 5 schematically illustrates a protocol installation processing at an initial stage. It should be noted that in the state transition diagram shown in FIG. 5, the states S₁₁ and S₂₁ are indicated with thick lines, and this illustrates that the first and second layers are in the system states S₁₁ and S₂₁, respectively. Likewise, in the state transition diagrams of FIG. 6 and the others, those indicated with thick lines indicate that the layers are in the system states emphasized with the thick lines.
   The state detection section 50 notifies the protocol definition section 40 that the system states at the initial state are S₁₁ and S₂₁. As to the system state S₁₁ of the first layer, the correspondence of the transition rules T₁ and T₆ thereto is specified by the state table section 30, and as to the system state S₂₁ of the second layer, the correspondence of the transition rule T₁₀ thereto is specified by the state table section 30. The installation section 10 read the three transition rules T₁, T₆, and T₁₀ therein from the transition rule list section 20. In other words, a protocol composed of the three transition rules T₁, T₆, and T₁₀ is installed.
   It should be noted that in the state transition diagram of FIG. 5, the transition rules T₁, T₆, and T₁₀ are drawn in bold type, and this indicates that these transition rules are read into the installation section 10 and a protocol composed of these transition rules is installed. Likewise, in the diagrams of FIG. 6 and the others, the transition rules drawn in bold type in the state transition diagrams indicate that they are installed in the installation section 10.
(2) Next, assume that data having an input pattern I₁₀ are inputted via the data input/output section. FIG. 6 is a diagram illustrating state transition of the system in the case where data with an input pattern I₁₀ are inputted.
   When data having an input pattern I₁₀ are inputted, the transition rule T₁₀ among the transition rules T₁, T₆, and T₁₀ installed in the installation section 10 is activated, the processing P₁₀ is executed by the processing execution section 60, and an output pattern O₁₀ is outputted as an output result. As a result of the execution of the transition rule T₁₀, the system state makes transition. In this example, the system state of the first layer does not make transition, remaining in S₁₁, while the system state of the second layer makes transition to S₂₂. The processing execution section 60 notifies the state detection section 50 of information regarding the system state transition in the second layer. It should be noted that in the state transition diagram in FIG. 6 an arrow line indicative of transition from the system state S₂₁ to the system state S₂₂ is drawn with a thick line, which means that this system state transition occurs. In FIG. 7 and the other drawings, an arrow line drawn with a thick line indicates that a system state transition thus indicated occurs.
(3) Next, transition of the system state from S₂₁ to S₂₂ in the second layer leads to execution of dynamic protocol exchange. FIG. 7 schematically illustrates protocol exchange processing that is executed upon the transition of the system state in the second layer from S₂₁ to S₂₂.
   In FIG. 7, the protocol definition section 40 is notified by the state detection section 50 that the system states are S₁₁ and S₂₂. As to the system state S₁₁ in which the first layer has remained, correspondence of the transition rules T₁ and T₆ thereto is specified by the state table section 30, and as to the system state S₂₂ to which the second layer has made transition, correspondence of the transition rules T₁₁ and T₁₂ thereto is specified by the state table section 30. The installation section 10 reads four transition rules T₁, T₆, T₁₁, and T₁₂ therein from the transition rule list section 20, and exchanges the previous transition rules T₁, T₆, and T₁₀ installed at the stage of FIG. 6 for those thus read in. This dynamic exchange of transition rules causes the protocol installed in the installation section 10 to be dynamically exchanged for a new protocol composed of four transition rules T₁, T₆, T₁₁, and T₁₂.
(4) Next, assume that data having an input pattern I₁ is inputted via the data input/output section. FIG. 8 is a diagram illustrating state transition of the system in the case where data with an input pattern I₁ are inputted.
   When data having an input pattern I₁ are inputted, the transition rule T₁ among the transition rules T₁, T₆, T₁₁, and T₁₂ installed in the installation section 10 is activated, the processing P₁ is executed by the processing execution section 60, and an output pattern O₁ is outputted as an output result. As a result of the execution of the transition rule T₁, the system state makes transition. In this example, the system state of the first layer makes transition to S₁₂, while the system state of the second layer remains in S₂₂. The processing execution section 60 notifies the state detection section 50 of information regarding the system state transition in the first layer.
(5) Next, transition of the system state from S₁₁ to S₁₂ in the first layer leads to execution of dynamic protocol exchange. FIG. 9 schematically illustrates protocol exchange processing that is executed upon the transition of the system state in the first layer from S₁₁ to S₁₂.
   In FIG. 9, the protocol definition section 40 is notified by the state detection section 50 that the system states are S₁₂ and S₂₂. As to the system state S₁₂ to which the first layer has made transition, correspondence of the transition rules T₂, T₃, T₄, and T₇ thereto is specified by the state table section 30, and as to the system state S₂₂ in which the second layer has remained, correspondence of the transition rules T₁₁ and T₁₂ thereto is specified by the state table section 30. The installation section 10 reads six transition rules T₂, T₃, T₄, T₇, T₁₁, and T₁₂ therein from the transition rule list section 20, and exchanges the previous transition rules T₁, T₆, T₁₁, and T₁₂ installed at the stage of FIG. 8 for those thus read in. This dynamic exchange of transition rules causes the protocol installed in the installation section 10 to be dynamically exchanged for a new protocol composed of four transition rules T₂, T₃, T₄, T₇, T₁₁, and T₁₂.
(6) Next, assume that data having an input pattern I₇ is inputted via the data input/output section. FIG. 10 is a diagram illustrating state transition of the system in the case where data with an input pattern I₇ are inputted.
   When data having an input pattern I₇ are inputted, the transition rule T₇ among the transition rules T₂, T₃, T₄, T₇, T₁₁, and T₁₂ installed in the installation section 10 is activated, the processing P₇ is executed by the processing execution section 60, and an output pattern O₇ is outputted as an output result. As a result of the execution of the transition rule T₇, the system state makes transition. In this example, the system state of the first layer makes transition to S₁₄, while the system state of the second layer remains in S₂₂. The processing execution section 60 notifies the state detection section 50 of information regarding the system state transition in the first layer.
(7) Next, transition of the system state from S₁₂ to S₁₄ in the first layer leads to execution of dynamic protocol exchange. FIG. 11 schematically illustrates protocol exchange processing that is executed upon the transition of the system state in the first layer from S₁₂ to S₁₄.
   In FIG. 11, the protocol definition section 40 is notified by the state detection section 50 that the system states are S₁₄ and S₂₂. As to the system state S₁₄ to which the first layer has made transition, correspondence of the transition rule T₈ thereto is specified by the state table section 30, and as to the system state S₂₂ in which the second layer has remained, correspondence of the transition rules T₁₁ and T₁₂ thereto is specified by the state table section 30. The installation section 10 reads three transition rules T₈, T₁₁, and T₁₂ therein from the transition rule list section 20, and exchanges the previous transition rules T₂, T₃, T₄, T₇, T₁₁, and T₁₂ installed at the stage of FIG. 10 for those thus read in. This dynamic exchange of transition rules causes the protocol installed in the installation section 10 to be dynamically exchanged for a new protocol composed of four transition rules T₈, T₁₁, and T₁₂.
(8) Next, assume that data having an input pattern I₁₂ is inputted via the data input/output section. FIG. 12 is a diagram illustrating state transition of the system in the case where data with an input pattern I₁₂ are inputted.
   When data having an input pattern I₁₂ are inputted, the transition rule T₁₂ among the transition rules T₈, T₁₁, and T₁₂ installed in the installation section 10 is activated, the processing P₁₂ is executed by the processing execution section 60, and an output pattern O₁₂ is outputted as an output result. As a result of the execution of the transition rule T₁₂, the system state makes transition. In this example, the system state of the first layer remains in S₁₄, while the system state of the second layer makes transition to S₂₃. The processing execution section 60 notifies the state detection section 50 of information regarding the system state transition in the second layer.
(9) Next, transition of the system state from S₂₂ to S₂₃ in the second layer leads to execution of dynamic protocol exchange. FIG. 13 schematically illustrates protocol exchange processing that is executed upon the transition of the system state in the second layer from S₂₂ to S₂₃.
   In FIG. 13, the protocol definition section 40 is notified by the state detection section 50 that the system states are S₁₄ and S₂₃. As to the system state S₁₄ in which the first layer has remained, correspondence of the transition rule T₈ thereto is specified by the state table section 30, and as to the system state S₂₃ to which the second layer has made transition, correspondence of the transition rule T₁₃ thereto is specified by the state table section 30.
   Here, since the combination of the system states of the first and second layers is a combination of S₁₄ and S₂₃, correspondence of the transition rule T₉ thereto is further specified by the state table section 30.
   The installation section 10 reads three transition rules T₈, T₉, and T₁₃ therein from the transition rule list section 20, and exchanges the previous transition rules T₈, T₁₁, and T₁₂ installed at the stage of FIG. 12 for those thus read in. This dynamic exchange of transition rules causes the protocol installed in the installation section 10 to be dynamically exchanged for a new protocol composed of four transition rules T₈, T₉, and T₁₃.
(10) Next, assume that data having an input pattern I₉ is inputted via the data input/output section. FIG. 14 is a diagram illustrating state transition of the system in the case where data with an input pattern I₉ are inputted.
   When data having an input pattern I₉ are inputted, the transition rule T₉ among the transition rules T₈, T₉, and T₁₃ installed in the installation section 10 is activated, the processing P₉ is executed by the processing execution section 60, and an output pattern O₉ is outputted as an output result. As a result of the execution of the transition rule T₉, the system state makes transition. In this example, system transition according to the combination of the system states of the first and second layers occurs, in which the system state of the first layer makes transition from S₁₄ to S₁₂. It should be noted that the system state of the second layer remains in S₂₃. The processing execution section 60 notifies the state detection section 50 of information regarding the system state transition in the first layer.
(11) Next, transition of the system state from S₁₄ to S₁₂ in the second layer leads to execution of dynamic protocol exchange. FIG. 15 schematically illustrates protocol exchange processing that is executed upon the transition of the system state in the second layer from S₁₄ to S₁₂.
   In FIG. 15, the protocol definition section 40 is notified by the state detection section 50 that the system states are S₁₂ and S₂₃. As to the system state S₁₂ to which the first layer has made transition, correspondence of the transition rules T₂, T₃, T₄, and T₇ thereto is specified by the state table section 30, and as to the system state S₂₃ in which the second layer has remained, correspondence of the transition rule T₁₃ thereto is specified by the state table section 30. It should be noted that correspondence of the transition rule T₉ is no longer needed since the combination of the system state S₁₄ of the first layer and the system state S₂₃ of the second layer disappears.
   The installation section 10 reads five transition rules T₂, T₃, T₄, T₇, and T₁₃ therein from the transition rule list section 20, and exchanges the previous transition rules T₈, T₉, and T₁₃ installed at the stage of FIG. 14 for those thus read in. This dynamic exchange of transition rules causes the protocol installed in the installation section 10 to be dynamically exchanged for a new protocol composed of four transition rules T₂, T₃, T₄, T₇, and T₁₃.
(12) Next, assume that data having an input pattern I₂ is inputted via the data input/output section. FIG. 16 is a diagram illustrating state transition of the system in the case where data with an input pattern I₂ are inputted.
   When data having an input pattern I₂ are inputted, the transition rule T₂ among the transition rules T₂, T₃, T₄, T₇, and T₁₃ installed in the installation section 10 is activated, the processing P₂ is executed by the processing execution section 60, and an output pattern O₂ is outputted as an output result.
   As a result of the execution of the transition rule T₂, the system state makes transition. Here, the transition relationship T₂ describes the relationship in that in the case where the transition rule T₂ is executed when the system state of the first layer is S₁₂, the second layer makes transition to S₂₁ irrespective of the system state thereof; namely, the relationship in that the transition relationship of the second layer depends on the transition relationship of the first layer. Therefore, the second layer makes transition of the system state S₂₃ to the system state S₂₁. It should be noted that the first layer remains in the system state S₁₂.
   The processing execution section 60 notifies the state detection section 50 of information regarding the system state transition in the second layer.
(13) Next, transition of the system state from S₂₃ to S₂₁ in the second layer leads to execution of dynamic protocol exchange. FIG. 17 schematically illustrates protocol exchange processing that is executed upon the transition of the system state in the second layer from S₂₃ to S₂₁.
   In FIG. 17, the protocol definition section 40 is notified by the state detection section 50 that the system states are S₁₂ and S₂₁. As to the system state S₁₂ in which the first layer has remained, correspondence of the transition rules T₂, T₃, T₄, and T₇ thereto is specified by the state table section 30, and as to the system state S₂₁ to which the second layer has made transition, correspondence of the transition rule T₁₀ thereto is specified by the state table section 30. The installation section 10 reads five transition rules T₂, T₃, T₄, T₇, and T₁₀ therein from the transition rule list section 20, and exchanges the previous transition rules T₂, T₃, T₄, T₇, and T₁₀ installed at the stage of FIG. 16 for those thus read in. This dynamic exchange of transition rules causes the protocol installed in the installation section 10 to be dynamically exchanged for a new protocol composed of four transition rules T₂, T₃, T₄, T₇, and T₁₀.
   Thus, according to the dynamic protocol exchange system shown in the second embodiment, the hierarchical state transition relationship can be described as the state transition relationship specified by the protocol definition, and under the foregoing state transition relationship, transition rules corresponding to the system state can be retrieved from the state table, and the installation section reads one or a plurality of corresponding transition rules therein from the transition rule list section, so that a protocol composed of these transition rules can be installed. In other words, contents of the protocol installed can be dynamically exchanged according to an operation state of the system that dynamically varies.

### Third Embodiment

A dynamic protocol exchange system of the present invention can be described as a program that describes processing operations for implementing the aforementioned configuration, and the dynamic protocol exchange system of the present invention can be built up by causing a computer to read the program therein. A program including processing operations for implementing the dynamic protocol exchange system of the present invention can be provided in a state of being stored in not only a portable recording medium 1001 such as a CD-ROM 1002 or a flexible disk 1003 but also a recording medium 1000 in a recording device on the network, or a recording medium 1005 such as a hard disk or a RAM of a computer, or can be downloaded from the network. Upon the execution of the program, the program is loaded in a computer 1004, and is executed on a main memory.

With the dynamic protocol exchange system and method of the present invention, an optimal protocol with respect to a current system state is installed by dynamically exchanging the protocol according to dynamic variation of the system state, while the processing efficiency of the system can be maintained.

Furthermore, with the dynamic protocol exchange system and method of the present invention, it is possible to describe hierarchical state transition relationship specified by the protocol definition, and to read one or a plurality of transition rules corresponding to a system state under the foregoing state transition relationship, so that a protocol composed of the foregoing transition rules can be installed.

## Claims

1. A dynamic protocol exchange system, comprising:
a transition rule list section that includes transition rules each of which specifies correspondence among an input pattern to be received, a processing to be executed, and an output pattern to be outputted as a result of the processing; and
an installation section that installs one or a plurality of transition rules selected from the transition rule list section according to a system state,
wherein the installation section dynamically exchanges contents of the installed protocol according to the system state.

2. A dynamic protocol exchange system, comprising:
a protocol definition section including a transition rule list section and a state table section, the transition rule list section including transition rules each of which specifies correspondence among an input pattern to be received, a processing to be executed, and an output pattern to be outputted as a result of the processing, the state table specifying correspondences between system states and one or a plurality of transition rules to be used in the system states;
a state detection section that detects a system state; and
an installation section that installs one or a plurality of transition rules selected from the transition rule list section according to the system state,
wherein the installation section is notified of a system state by the state detection section, retrieves one or a plurality transition rules corresponding to the system state from the state table section, and installs therein the transition rules as retrieval results from the transition rule list section as a protocol of the system.

3. The dynamic protocol exchange system according to claim1 or 2, wherein the transition rules are defined so as not to include information regarding the system state.

4. The dynamic protocol exchange system according to claim 1 or 2, further comprising:
a data input/output section for inputting and outputting data; and
a processing execution section for executing a transition rule having an input pattern that matches an input pattern of the inputted data among the transition rules installed in the execution section.

5. The dynamic protocol exchange system according to claim 1 or 2, wherein system state transition relationship defined according to the state table of the state table section and the transition rules of the transition rule list section has layers so as to be multiplexed.

6. A dynamic protocol exchange method, comprising:
collecting transition rules each of which specifies correspondence among an input pattern to be received, a processing to be executed, and an output pattern to be outputted as a result of the processing, so as to prepare a transition rule list;
installing one or a plurality of transition rules as a protocol of the system, the transition rules being selected from the transition rule list according to a system state; and
dynamically exchange contents of the installed protocol according to the system state.

7. A dynamic protocol exchange method, comprising:
preparing a protocol definition provided with a transition rule list that includes transition rules each of which specifies correspondence among an input pattern to be received, a processing to be executed, and an output pattern to be outputted as a result of the processing, and a state table specifying correspondences between system states and one or a plurality of transition rules to be used in the system states;
detecting a system state;
retrieving one or a plurality of transition rules corresponding to the detected system state from the state table, and installing the transition rules as retrieval results from the transition rule list as a protocol of the system; and
dynamically exchanging contents of the installed protocol according to the system state.

8. The dynamic protocol exchange method according to claim 6 or 7, wherein the transition rules are defined so as not to include information regarding the system state.

9. The dynamic protocol exchange method according to claim 6 or 7, further comprising:
inputting data; and
executing a transition rule having an input pattern that matches an input pattern of the inputted data, among the transition rules installed in the execution section.

10. The dynamic protocol exchange method according to claim 6 or 7, wherein system state transition relationship defined according to the state table and the transition rules has layers so as to be multiplexed.

11. A program for processing operations of a system that operates while dynamically exchanging a protocol, the program comprising the operations of:
collecting transition rules each of which specifies correspondence among an input pattern to be received, a processing to be executed, and an output pattern to be outputted as a result of the processing, so as to prepare a transition rule list;
installing one or a plurality of transition rules as a protocol of the system, the transition rules being selected from the transition rule list according to a system state; and
dynamically exchanging contents of the installed protocol according to the system state that dynamically varies.

12. A program for processing operations of a system that operates while dynamically exchanging a protocol, the program comprising the operations of:
preparing a protocol definition provided with a transition rule list that includes transition rules each of which specifies correspondence among an input pattern to be received, a processing to be executed, and an output pattern to be outputted as a result of the processing, and a state table specifying correspondences between system states and one or a plurality of transition rules to be used in the system states;
detecting a system state; and
retrieving one or a plurality of transition rules corresponding to the detected system state from the state table, and installing the transition rules as retrieval results from the transition rule list as a protocol of the system.
